(19) Europäisches Patentamt / European Patent Office / Office européen des brevets

(11) **EP 2 884 236 A1**

(12) **EUROPÄISCHE PATENTANMELDUNG**

(43) Veröffentlichungstag:
**17.06.2015 Patentblatt 2015/25**

(51) Int Cl.:
**G01D 5/20** (2006.01)          **G01L 3/00** (2006.01)

(21) Anmeldenummer: **14197720.7**

(22) Anmeldetag: **12.12.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **13.12.2013 DE 102013225921**

(71) Anmelder: **Continental Teves AG & Co. oHG 60488 Frankfurt (DE)**

(72) Erfinder:
• **Schirling, Andreas**
  **64285 Darmstadt (DE)**
• **Stählin, Ulrich**
  **65760 Eschborn (DE)**

(54) **Induktiver Drehwinkel- und Drehmomentsensor mit einer mit Schwingkreisen bestückten Positionsgebereinheit**

(57)    Drehwinkelsensor (2, 102) zum Erfassen der Position eines bewegenden Elements (180), insbesondere Rotors eines elektrischen Motors, aufweisend:
- eine Erregerspule (20), welche mit einer Wechselspannung (U~) versorgt wird, um ein zur Wechselspannung korrespondierendes Erregerfeld zu erzeugen,
- mindestens eine, vorzugsweise zwei, Empfangsspule (40a, 40b), die mit der Erregerspule (20) derart gekoppelt sind, so dass das Erregerfeld in den Empfangsspulen (40a, 40b) jeweils eine Spannung (Uout1, Uout2) induziert, und
- eine Positionsgebereinheit (30, 130), das mit dem bewegenden Element (180) verbunden ist und mittels dessen die Spannung (Uout1, Uout2) der Empfangsspule beeinflussbar ist,
dadurch gekennzeichnet, dass die Positionsgebereinheit (30, 130)mehrere Schwingkreise (LC) mit unterschiedlichen Eigenfrequenzen aufweist.

Fig. 3

**Beschreibung**

Die Erfindung betrifft einen Drehwinkelsensor zum Erfassen des Drehwinkels oder eine Drehmoments eines rotierenden Elements gemäß dem Oberbegriff der unabhängigen Ansprüche.

Aus der EP 1 828 722 B1 ist ein induktiver Positionsdetektor mit einer ersten induktiven Einrichtung und einer zweiten induktiven Einrichtung bekannt, wobei die erste induktive Einrichtung einen passiven Resonanzkreis umfasst und die zweite induktive Einrichtung die Messstrecke definiert und mindestens zwei Empfangswindungen umfasst. Die zweite induktive Einrichtung ist so konfiguriert, dass sie im Gebrauch einen Wechselstrom in dem passiven Resonanzkreis induziert, sodass der in dem passiven Resonanzkreis induzierte Wechselstrom infolge der gegenseitigen Induktivität zwischen den Empfangswindungen und dem passiven Resonanzkreis ein Wechselsignal in jeder Empfangswindung induziert, wobei diese Signale bezeichnend sind für die Position der ersten induktiven Einrichtung auf der Messstrecke. Aus dieser Druckschrift ist es zwar bekannt, dass Prinzip des Positionsdetektors im Allgemeinen zur Messung eines Drehwinkel anzuwenden. Es wird jedoch nicht offenbart, wie eine solche Ausführungsform konkret aussehen könnte.

Davon ausgehend liegt der Erfindung die Aufgabe zu Grunde, das bekannte Prinzip für einen Drehwinkelsensor oder einen Drehmomentsensor weiterzubilden.

Die Aufgabe wird durch die Merkmale der unabhängigen Ansprüche gelöst. Bevorzugte Ausführungsformen sind Gegenstand der abhängigen Ansprüche.

Der Erfindung liegt der Grundgedanke zu Grunde die Positionsgebereinheit mit mehreren Schwingkreisen zu bestücken, die mittels der Empfangsspule anhand ihrer Eigenfrequenz identifiziert werden können. Die relative Position der Schwingkreise zueinander ändert sich nicht, so dass es möglich ist, anhand einer Messung der Position eines Schwingkreises auf die Position der anderen Schwingkreise zu schließen. Das Prinzip lässt sich dabei sowohl für einen Drehwinkel- als auch für einen Drehmomentsensor nutzen. Vorteilhaft ist es zwei oder mehr Empfangsspulen zu verwenden. In der nachfolgenden Beschreibung wird daher auf mehrere Empfangsspulen Bezug genommen. Nachfolgende Ausführungsformen können im Prinzip auch mit einer Empfangsspule ausgeführt werden.

Die Positionsgebereinheit ist mit dem zu vermessenden Element, beispielsweise eine rotierende Welle oder ein Torsionselement, verbunden und gibt die Bewegung bzw. Verformung dieses Elements wieder. Durch das Erfassen der absoluten Position oder der relativen Bewegung des bewegenden Elements zu den Empfangsspulen kann der die entsprechende Messgröße über die Positionsgebereinheit entweder relativ zu den Empfangsspulen oder absolut in Bezug auf einen Bezugspunkt erfasst werden. Die Positionsgebereinheit ist ein von der Erregerspule und den Empfangsspulen separates Teil, das bspw. parallel benachbart zu den Spulen angeordnet ist.

Eine vorteilhafte Ausführungsform des Drehwinkelsensors weist ein Positionsgebereinheit mit einem Trägerkörper auf, wo die Schwingkreise gleichmäßig um einen Rotationspunkt herum angeordnet sind. Der Messbereich von 360° kann auf diese Weise in mehreren Sektoren bzw. Segmente unterteilt werden, so dass beim erfassen eines Schwingkreises ein Rückschluss auf den jeweiligen Kreissektor bzw. Kreissegment geschlossen werden kann.

Die nachfolgenden Ausführungsformen sind sowohl auf den Drehwinkel- als auch auf den Drehmomentsensor anwendbar.

Eine vorteilhafte Ausführungsform des erfindungsgemäßen Sensors ist derart ausgebildet, dass der Schwingkreis mindestens ein kapazitives und ein induktives Element aufweist.

Eine vorteilhafte Ausführungsform des erfindungsgemäßen Sensors ist derart ausgebildet, dass das kapazitive Element ein Kondensator und / oder das induktive Element ein Stromleiter ist. Der Kondensator und das induktive Element können als auf eine Leiterplatine aufgedruckte Leiter oder Leiterbahnen ausgeführt sein. Dies ermöglicht, insbesondere im Zusammenhang mit einem ringförmigen Trägerkörper der Positionsgebereinheit, eine besonders variable Ausnutzung der Anbringfläche auf dem Trägerkörper. Zudem kann die Form der Schwingkreise variabel an den jeweiligen Bedarf angepasst werden.

Eine vorteilhafte Ausführungsform des erfindungsgemäßen Sensors ist derart ausgebildet, dass die Schwingkreise jeweils einen Anfangs- und Endpunkt aufweisen, wobei die Anfangs- und Endpunkte der Schwingkreise, vorzugsweise entlang einer Bewegungsbahn, versetzt voneinander angeordnet sind. Auf diese Weise ist eine besonders eindeutige Unterscheidung der jeweiligen Schwingkreise voneinander möglich.

Eine vorteilhafte Ausführungsform des erfindungsgemäßen Sensors ist derart ausgebildet, dass die Eigenfrequenz des Schwingkreises mittels der Verlaufsform des Stromleiters festgelegt wird. Die Verlaufsformen können beispielsweise eine periodische Funktion abbilden. Es ist beispielsweise denkbar, dass der Stromleitern eine sinus-, kosinus-, trapez-, dreiecks-, oder rechteckförmigen Verlauf aufweist.

Eine vorteilhafte Ausführungsform des erfindungsgemäßen Sensors ist derart ausgebildet, dass die Eigenfrequenz des Schwingkreises in Abhängigkeit der Erregerfrequenz festgelegt wird. Diese Ausführungsform ist besonders dann vorteilhaft, wenn die Frequenz der Wechselspannung nicht beliebig festgelegt werden kann.

Eine vorteilhafte Ausführungsform des erfindungsgemäßen Sensors ist derart ausgebildet, dass die Wechselspannung eine Spannungsfrequenz aufweist, die in unterschiedliche Frequenzen einstellbar ist. Auf diese Weise ist es möglich, die Frequenz der Wechselspannung und somit auch die Frequenz des Erregerfeldes entsprechend der Eigenfrequenzen der Schwingkreise festzulegen.

Eine vorteilhafte Ausführungsform des erfindungsgemäßen Sensors ist derart ausgebildet, dass die Spannungsfrequenz mittels Addition mehrerer Spannungsfrequenzen eingestellt wird.

Eine vorteilhafte Ausführungsform des erfindungsgemäßen Sensors ist derart ausgebildet, dass die Spannungsfrequenz abwechselnd in unterschiedliche Frequenzen einstellbar ist. Mittels dieser Ausführungsform ist es möglich, bestimmte Schwingkreise abwechselnd hintereinander zu erfassen.

Eine vorteilhafte Ausführungsform des erfindungsgemäßen Sensors ist derart ausgebildet, dass die Spannungsfrequenz in Abhängigkeit der Eigenfrequenz der Schwingkreise eingestellt wird oder die Eigenfrequenz in Abhängigkeit der unterschiedlich einstellbaren Spannungsfrequenzen festgelegt wird.

Die Erfindung wird nachfolgend anhand von Ausführungsbeispielen und Figuren näher beschrieben und es zeigen:

Die Erfindung umfasst ferner einen Kombination aus einem Drehwinkel- und einem Drehmomentsensor nach einem der vorstehenden Ausführungsformen.

Fig. 1 eine schematische Schaltungsanordnung mit einem ersten Ausführungsbeispiel des erfindungsgemäßen Drehwinkelsensors,

Fig. 2 eine schematische Darstellung der Erregerspule und der Empfangsspulen,

Fig. 3 eine schematische Darstellung der Positionsgebereinheit,

Fig. 4 einen schematischen Aufbau eines Drehwinkelsensors, und

Fig. 5 einen schematischen Aufbau eines Drehmomentensensors.

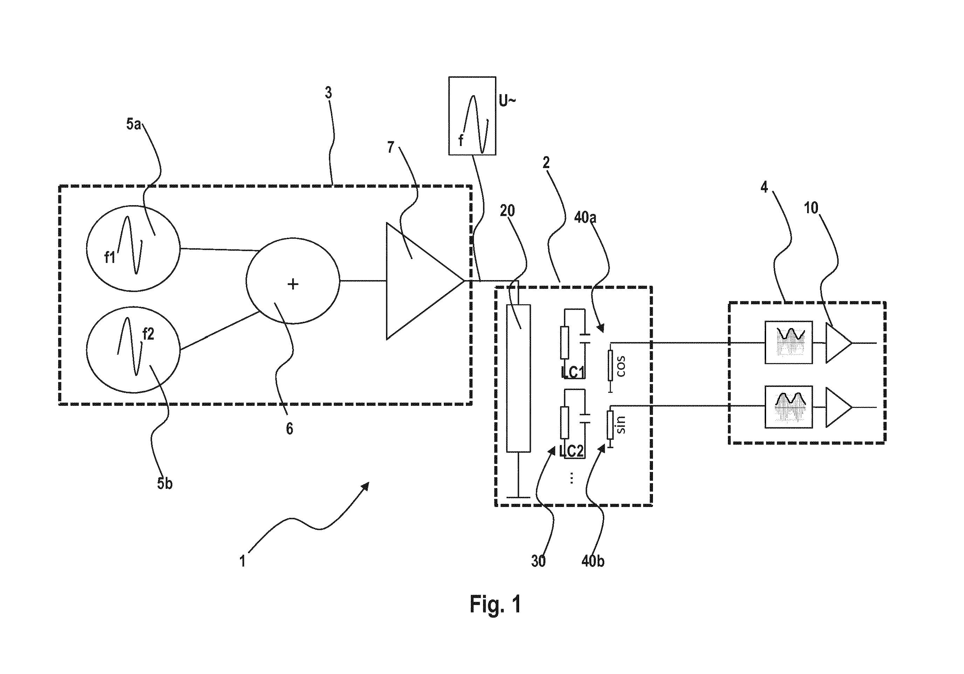

Figur 1 zeigt eine Schaltungsanordnung 1 zum Betreiben eines erfindungsgemäßen Sensors 2 in einer schematischen Darstellung. Die Schaltungsanordnung weist eine Spannungsquelle 3, den Sensor 2 sowie eine Auswerteeinheit 4 auf. Die Anordnung kann beispielsweise in einem elektrischen Motor, z. B. Gleichstrommotor, eingebaut sein.

Die Spannungsquelle 3 ist mit der Erregerspule 20 elektrisch verbunden und versorgt diese mit einer Wechselspannung U~ zum erzeugen eines zur Wechselspannung U~ korrespondierenden Erregerfeldes. Die Wechselspannung U~ weist eine Spannungsfrequenz auf f, die variabel einstellbar ist und in unterschiedliche Spannungsfrequenzen bzw. Frequenzen einstellbar ist. Die Wechselspannung kann beispielsweise abwechselnd in unterschiedliche Frequenzen eingestellt werden. Dies kann derart erfolgen, dass die Spannungsfrequenz f mittels Addition mehrerer Spannungsfrequenzen f1, f2 eingestellt wird. Hierzu weist die Spannungsquelle 3 zunächst zwei Wechselspannungserzeuger 5a und 5b auf, die jeweils eine Wechselspannung in unterschiedlichen Frequenzen f1, f2 erzeugen. Diese Ausgestaltung hat den Vorteil, dass die Wechselspannung U~ leicht durch Variierung der Summenteile veränderbar ist. Die Ausgangssignale der Spannungserzeuger 5a und 5b werden einem Addierer 6 zugeführt. Die Summe der Ausgangssignale werden einer Treibereinheit 7 zugeführt, der aus diesem Signal die Wechselspannung U~ erzeugt und diese der Erregerspule 20 zuführt. Es ist jedoch auch denkbar andere bereits bekannte Lösungen zur Erzeugung einer Wechselspannung in unterschiedlichen Frequenzen zu verwenden.

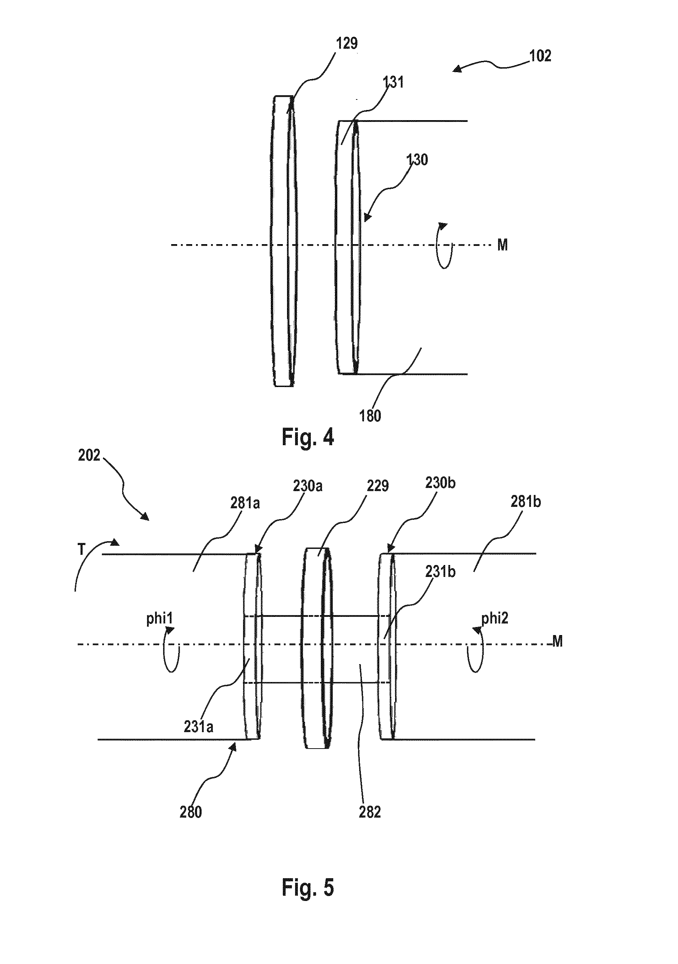

Der Sensor 2 umfasst im Wesentlichen die Erregerspule 20, eine Positionsgebereinheit 30 und zwei Empfangsspulen 40a, 40b. In Figur 1 ist die Anordnung der Erregerspule 20, der Positionsgebereinheit 30 und der Empfangsspulen 40a, 40b schematisch dargestellt. In einer bevorzugten Anordnung, s. Figuren 4 und 5, sind die Empfangsspulen und die Erregerspule auf einem Trägerkörper angeordnet und die Positionsgebereinheit parallel benachbart zu den Spulen bzw. deren Trägerkörper angeordnet. Dies gilt auch für das auf Figur 1 bezogene Ausführungsbeispiel entsprechend.

Die Erregerspule 20 ist vorzugsweise als eine auf einer Leiterplatine aufgedruckte Leiterbahn ausgebildet und um die Empfangsspulen 40a, 40b herum angeordnet, so dass das durch die Wechselspannung erzeugte Erregerfeld eine Spannung in den Empfangsspulen 40a, 40b induziert. Die Erregerspule 20 weist eine Wicklung 21 auf, die einen sich über einen Kreissegment erstreckt. In diesem Ausführungsbeispiel umfasst das Kreissegment im Wesentlichen einen Winkel von alpha=90°. Leichte Abweichungen sind möglich. Denkbar ist auch eine Ausführung der Erreger- und Empfangsspulen über einen vollen Kreisumfang. Die Wicklung 21 ist über zwei Bahnen gewickelt, wobei die Anschlusspunkte 22 außen angeordnet sind. Die Erregerspule 20 ist über die Anschlusspunkte 22 mit der Spannungsquelle 3 verbunden. In radialer Errichtung weist die Erregerspule 20 jeweils eine geradlinige Begrenzung 25a, 25b auf, die mit zwei kreisbogenförmigen Abschnitten 26a, 26b einen Bereich eingrenzen, in der die Empfangsspulen 40a, 40b angeordnet sind. Auf diese Weise wird sichergestellt, dass die Empfangsspulen 40a, 40b mit der Erregerspule 20 induktiv gekoppelt sind.

Die Empfangsspule 40a, 40b weisen jeweils eine Wicklung 43a, 43b auf. Die Wicklungen 43a, 43b haben einen sinus- bzw. kosinusförmigen Verlauf. Denkbar sind auch andere periodische Formen, wie in den anderen Ausführungsbeispielen gezeigt. Die Wicklungen 43a, 43b haben einen Anfangspunkt 41a, 41b, die an einem Ende des Kreissegments angeordnet sind. Die Wicklungen 43a, 43b laufen von dort entsprechend ihrer periodischer Form entlang des Kreissegments bis zum anderen Ende des Kreissegments. Von dem anderen Ende laufen die Wicklungen 43a, 43b wie eine reflektierte Welle zum ersten Ende des Kreissegments zurück. Vorzugsweise ist die Periodenlänge der Wicklungen derart ausgeführt, dass ein ganzzahliges Vielfaches der Periode innerhalb des Kreissegments hineinpasst, wie im Falle der Empfangsspule 40a. Andernfalls wird das, wie im Falle der Empfangsspule 40b, die Wicklung 43b über einen im Wesentlichen Abschnitt im Wesentlichen entlang der Wicklung der Erregerspule 20 nach innen geführt. Von dort aus verläuft die Wicklung 43b nach der vorgegebenen periodischen Form. Das Ende der Wicklung 43a, 43b bildet jeweils ein Endpunkt 42a, 42b. Über die Anfangs- und Endpunkte 41a, 42a, 41b, 42b wird die Ausgasspannung Uout1~, Uout2~ von den Empfangsspulen abgegriffen.

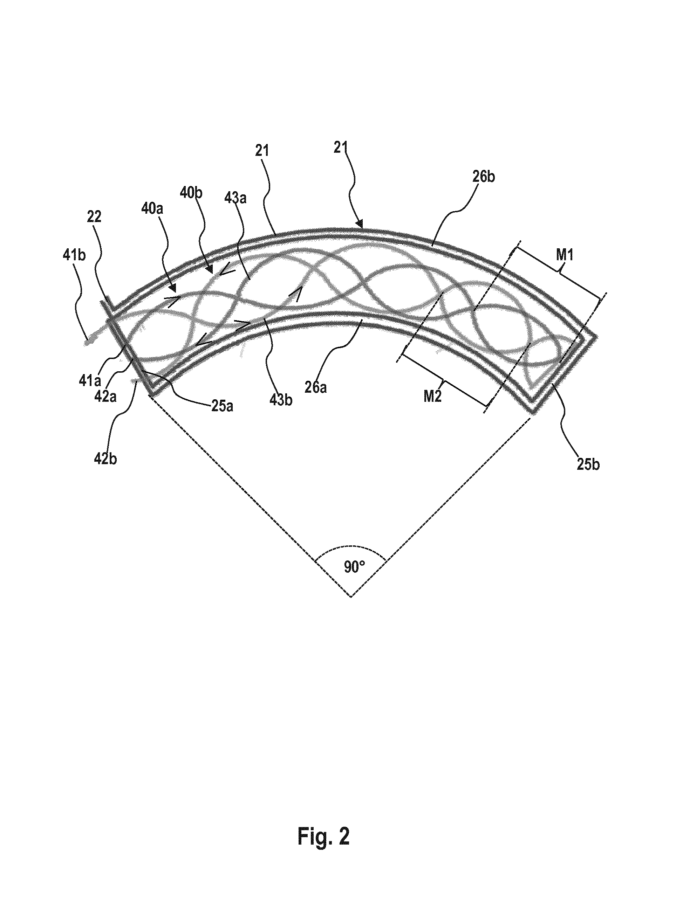

Die Empfangsspulen 40a, 40b weisen mehrere Messfelder auf, in Figur 2 exemplarisch mit M1, M2 gekennzeichnet. Die Messfelder haben entsprechend der Laufrichtung der Wicklungen 43a, 43b jeweils eine Wicklungsrichtung. In Figur 2 sind die Wicklung Richtungen durch die Pfeilspitzen auf den Wicklungen gekennzeichnet.

Die Erregerspule 20 und die Empfangsspulen 40a, 40b sind vorzugsweise auf einer Leiterplatine mittels aufgedruckten Leiterbahnen ausgebildet. Der Trägerkörper, in dem Fall die Leiterplatine, ist kreissegmentförmig ausgebildet. Vorteilhafterweise nicht wesentlich größer, das der Bereich, den die Erregerspule 20 einnimmt.

Aufgrund der induktiven Kopplung mit der Erregerspule 20 erzeugen die zwei Empfangsspulen 40a, 40b (es können auch mehr sein) jeweils eine Ausgangsspannung Uout1, Uout2 (vgl. Fig. 1), die eine sinusförmige bzw. kosinusförmige Form aufweisen können. Die Spannungen Uout1, Uout2 variieren, sobald die Positionsgebereinheit 30 eines der Messfelder M1, M2 der Empfangsspulen 40a, 40b überdeckt, wie in Figur 5 schematisch dargestellt.

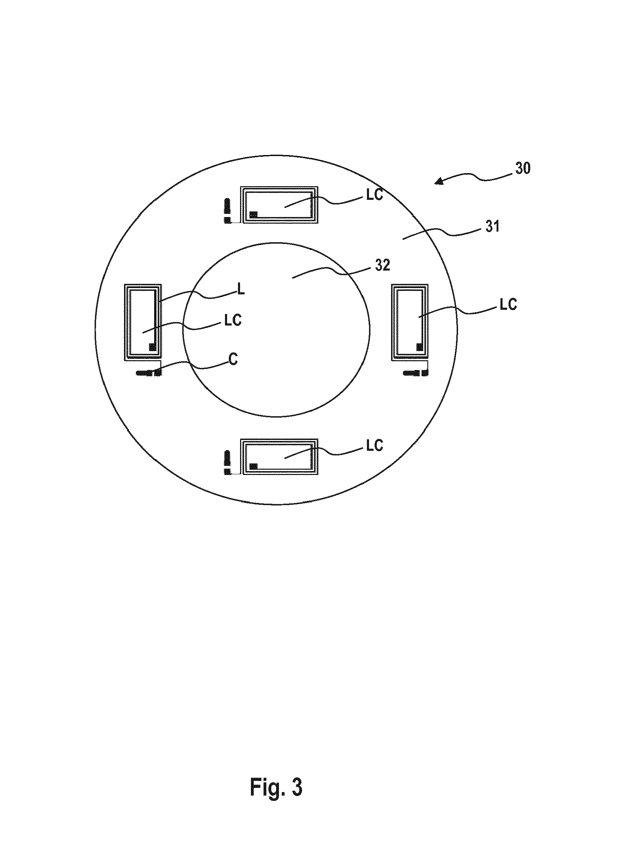

In Figur 3 ist ein Ausführungsbeispiel der Positionsgebereinheit 30 gezeigt. Die Positionsgebereinheit 30 ist mit einem bspw. mit einem rotierenden Element (vgl. Figuren 4 und 5) verbunden und verändert ihre relative Position zu den Empfangsspulen 40a, 40b durch die Bewegung des rotierenden Elements.

Die Positionsgebereinheit 30 weist einen Trägerkörper 31 auf, der beispielsweise als eine Leiterplatine ausgeführt sein kann. Der Trägerkörper 31 ist ringförmig ausgebildet. In der Mitte weist der Trägerkörper 31 eine Ausnehmung 32 auf, durch die das rotierende Element durchführbar ist.

Auf einer Fläche des Trägerkörpers 31 sind mehrere Schwingkreise LC innerhalb des ringförmigen Bereichs angeordnet. Bei den Schwingkreisen handelt es sich um elektromagnetische Schwingkreise LC mit einem Kondensator C und einem Stromleiter L als induktives Element. Der Schwingkreis LC kann mittels auf einer Leiterplatine aufgedruckten Leiterbahnen hergestellt werden. Es handelt sich vorzugsweise um einen passiven Schwingkreis LC, der eine eigene Eigenfrequenz aufweist. Die Eigenfrequenzen der Schwingkreise können sich voneinander unterscheiden. Vorzugsweise beträgt die Eigenfrequenz des Schwingkreis LC der Frequenz des Erregerfeldes bzw. der Wechselspannungsfrequenz f. Vorzugsweise sind die Schwingkreise LC um den Mittelpunkt des Trägerkörper herum gleichmäßig beabstandet angeordnet. In Figur 4 sind vier Schwingkreise LC jeweils um 90° versetzt zueinander angeordnet. Die Anzahl m der Schwingkreise kann beispielsweise derart festgelegt werden, dass

$$m = 360° \ / \ alpha$$

ist, wobei alpha der Winkel ist, über den sich das Kreissegment der Erregerspule bzw. Empfangsspulen erstreckt.

Die Schwingkreise müssen nicht zwangsläufig innerhalb eines Kreissegments angeordnet oder viereckig ausgebildet sein. Es ist auch denkbar sich entlang des Umfangs des Trägerkörpers verlaufende Schwingkreise, ähnlich zu der Erregerspule, vorzusehen. Ferner ist es auch denkbar eine um den vollen Kreisumfang verlaufenden Schwingkreis vorzusehen, wobei die Schwingkreise in unterschiedlichen Radien angeordnet sind. Die Anfangs- und Endpunkte der Schwingkreise können dabei aufweisen, wobei die Anfangs- und Endpunkte der Schwingkreise versetzt voneinander angeordnet sein, beispielsweise entlang der Kreisbahn winkelversetzt.

Besonders vorteilhaft ist es, jeden Schwingkreis derart auszulegen, dass sich die Eigenfrequenz der Schwingkreise LC voneinander unterscheiden. Auf diese Weise ist mittels der Eigenfrequenzen jeder Schwingkreis eindeutig identifizierbar, so dass es möglich ist, die Position eines Schwingkreises relativ zu den Messfeldern eindeutig festzustellen. Vorteilhafterweise wird hierzu die Frequenz der Wechselspannung U~ abwechselnd, bspw. nacheinander in der Reihenfolge der Eigenfrequenzen der Schwingkreise LC eingestellt. Alternativ kann die Eigenfrequenz in Abhängigkeit der unterschiedlich einstellbaren Wechselspannungsfrequenzen f festgelegt werden.

Die Auswerteeinheit 4 ist mit den Empfangsspulen 40a, 40b verbunden und wertet die Ausgangsspannungen Uout1, Uout2 der Empfangsspulen 40a, 40b aus. Die Ausgangsspannungen Uout1, Uout2 der Empfangsspulen 40a, 40b werden mittels Demodulatoren 10 verarbeitet. Als Ausgangsspannung wird in der Regel ein sinus- oder kosinusförmiger Spannungsverlauf ausgegeben. Die Amplitude und Frequenz der Ausgangsspannungen gibt Ausschluss über die zumindest relative Winkelposition der Positionsgebereinheit 30 bzw. des rotierenden Elements.

Nachfolgend werden die Ausführungsbeispiele aus Figur 4 und 5 näher beschrieben. Figur 4 zeigt schematisch den Aufbau eines Drehwinkelsensors 102. In Figur 5 ist der Aufbau eines Drehmomentsensors 202 schematisch dargestellt. Diese Aufbauten können beispielsweise mit einer Schaltungsanordnung 1, wie in Figur 1 dargestellt, verwendet werden. Einzelheiten zu der Erregerspule, den Empfangsspulen und der Positionsgebereinheit sind in den Figuren 4 und 5 nicht dargestellt. Die vorgenannten Ausführungsbeispiele können mit diesen Aufbauten verwendet werden.

Der Drehwinkelsensor 102 aus Figur 4 zeigt einen Trägerkörper 129, auf dem eine Erregerspule und zwei Empfangsspulen angeordnet sind, beispielsweise wie in Figur 2 gezeigt. Der Trägerkörper 129 ist an einer Halterung drehfest angebracht. Benachbart zu dem Trägerkörper der Erregerspule und den Empfangsspulen befindet sich der Trägerkörper 131 der Positionsgebereinheit 130. Die Positionsgeber Einheit ist auf einer Welle 180 aufgebracht und dreht sich mit der Welle um die Mittelachse M mit. Dies wird durch den drehenden Pfeil um die Mittelachse M angedeutet. An der Außenseite des Trägerkörper 131 der Positionsgebereinheit 130 sind mehrere Schwingkreise, wie im Ausführungsbeispiel aus Figur 3 gezeigt, angebracht die mit den Empfangsspulen auf den Trägerkörper 129 zusammenwirken, um somit den Drehwinkel der Welle 180 festzustellen. In diesem Ausführungsbeispiel sitzt der Trägerkörper 131 der Positionsgebereinheit 130 auf der Stirnseite der Welle 180. Es ist jedoch auch denkbar, die Wellen durch den Trägerkörper 130 in durchzuführen.

Der Drehmomentsensor 2 weist ein Torsionselement 280 auf. Das Torsionselement 280 weist einen ersten Abschnitt 281a und einen zweiten Abschnitt 281b auf, die über ein Mittelstück 282 miteinander verbunden sind. Das Mittelstück wirkt als eine Art Torsionsfeder, so dass bei einem außenanliegenden Drehmoment T an eines der Abschnitte 281a, 281b die zwei Abschnitte in unterschiedlich großen Torsionswinkeln phi1, phi2 zueinander verdreht werden. Aufgrund der unterschiedlichen Verdrehwinkeln bzw. Torsionswinkeln phi1, phi2 des ersten und des zweiten Abschnitts sowie der Torsionssteifigkeit des Mittelstücks 282 kann ein Rückschluss auf das außenanliegende Drehmoment T geschlossen werden.

Das Mittelstück 282 geht durch einen die Erregerspule und die Empfangsspulen tragenden Trägerkörper 229 hindurch (dargestellt durch die gestrichelten Linien), so dass dieser Trägerkörper 229 zu den zwei Abschnitten 281a, 281b des Torsionselements 280 drehfest angeordnet ist. Darüber hinaus weisen die Positionsgebereinheiten 230a, 230b jeweils einen Trägerkörper 231a, 231b mit Ausnehmungen auf, durch welche das Mittelstück 282 hindurchgeführt ist, um mit den jeweiligen Abschnitten 281a, 281b verbunden zu sein.

Hierzu ist an den Stirnseiten der Abschnitte 281a, 281b jeweils eine Positionsgebereinheit 230a, 230b angeordnet, die mit der Erregerspule und den Empfangsspulen zusammenwirken. Es kann beispielsweise eine Positionsgebereinheit aus Figur 3 verwendet werden. Prinzipiell sind die Spulen auf einem Trägerkörper 229 angeordnet, der zwischen den Positionsgebereinheiten 230a, 230b angeordnet sein kann. Es sind an dieser Stelle zwei Varianten der Ausführung möglich.

Zum einen ist es denkbar auf jede Seiten des Trägerkörpers 229 jeweils eine Erregerspule und mehrere Empfangsspulen anzuordnen. Jeder Positionsgebereinheit 230a, 230b wäre eine Erregerspule und eine Empfangsspule zugeordnet, die auf der gegenüberliegenden Seite des Trägerkörpers angeordnet wären. Der Vorteil wäre, dass die Position der Positionsgebereinheiten 230a, 230b jederzeit erfasst werden könnten. Es wäre jedoch zu bedenken, dass der magnetische Einfluss der Erregerspulen zueinander und zu den Empfangsspulen zu einer Verfälschung der Messergebnisse führen könnte, insbesondere wenn der Trägerkörper 229 eine geringe Dicke aufweist. Dies könnte mittels einer magnetisch isolierenden Schicht zwischen den jeweiligen Spuleneinheiten verhindert werden. Der Nachteil lege darin, dass die Herstellungskosten für einen solchen Trägerkörper höher wären.

Alternativ ist es daher auch denkbar, die Position der einzelnen Positionsgebereinheiten 230a, 230b mittels der Ansteuerung der darauf aufgebrachten Schwingkreise zu erfassen. Hierzu würde man die jeweiligen Eigenfrequenzen der Schwingkreise als Wechselspannungsfrequenz einstellen. Die Positionsmessung der jeweiligen Positionsgebereinheit 230a, 230b würde dann gezielt über die Eigenfrequenzen der jeweiligen Schwingkreise zu regeln. Bei entsprechend schneller Umschaltung der Wechselspannungsfrequenz wäre diese Variante eine hinnehmbare Alternative zu einer dauerhaften Messung der Positionsgebereinheiten 231a, 231b. Besonders vorteilhaft wäre es dabei die Wicklungen der Empfangsspulen und / oder der Erregerspulen auf zumindest abschnittsweise auf beiden Seiten des Trägerkörpers 229 anzuordnen.

Die Erfindung ist nicht auf die vorgenannten Ausführungsbeispiele beschränkt. Der Trägerkörper kann beispielsweise in unterschiedlichen Formen ausgebildet sein. Besonders vorteilhaft sind Leiterplatinen oder Folien, auf die eine Leiterbahn anbringbar ist. Ferner können die Ausführungsbeispiele in einer einfachen Ausführung auch mit einer Wechselspannung in einer Frequenz realisiert werden.

Es ist ferner möglich, den Drehwinkelsensor mit einer einfachen Schaltungsanordnung zu verwenden, die mit einer einzigen Wechselspannungsfrequenz betrieben wird. Des Weiteren ist die Auswerteeinheit 4 nicht auf das oben genannte Ausführungsbeispiel beschränkt, sondern kann durch weitere Auswerteelektronik ergänzt werden.

**Patentansprüche**

1. Drehwinkelsensor (2, 102) zum Erfassen der Position eines bewegenden Elements (180), insbesondere Rotors eines elektrischen Motors, aufweisend:

   - eine Erregerspule (20), welche mit einer Wechselspannung (U~) versorgt wird, um ein zur Wechselspannung korrespondierendes Erregerfeld zu erzeugen,
   - mindestens eine, vorzugsweise zwei, Empfangsspule (40a, 40b), die mit der Erregerspule (20) derart gekoppelt sind, so dass das Erregerfeld in den Empfangsspulen (40a, 40b) jeweils eine Spannung (Uout1, Uout2) induziert, und
   - eine Positionsgebereinheit (30, 130), das mit dem bewegenden Element (180) verbunden ist und mittels dessen die Spannung (Uout1, Uout2) der Empfangsspule beeinflussbar ist,

   **dadurch gekennzeichnet, dass** die Positionsgebereinheit (30, 130)mehrere Schwingkreise (LC) mit unterschiedlichen Eigenfrequenzen aufweist.

2. Drehwinkelsensor nach Anspruch 1, **dadurch gekennzeichnet, dass** das Positionsgebereinheit einen Trägerkörper (31, 131) aufweist und die Schwingkreise (LC) gleichmäßig um einen Rotationspunkt herum angeordnet sind.

3. Drehmomentsensor (2, 202) zum Ermitteln des auf ein tordiertes Torsionselement (280) wirkendes Drehmoment (T) aufweisend:

   - eine Erregerspule (20), welche mit einer Wechselspannung (U~) versorgt wird, um ein zur Wechselspannung korrespondierendes Erregerfeld zu erzeugen,
   - mindestens zwei Empfangsspulen (40a, 40b), die mit der Erregerspule (20) derart gekoppelt sind, so dass das Erregerfeld in den Empfangsspulen (40a, 40b) jeweils eine Spannung (Uout1, Uout2) induziert, und
   - eine Positionsgebereinheit (30, 230), das mit dem bewegenden Element (280) verbunden ist und mittels dessen die Spannung (Uout1, Uout2) der Empfangsspulen (40a, 40b) beeinflussbar ist,

   **dadurch gekennzeichnet, dass** ein erster Schwingkreis (LC) mit einer ersten Eigenfrequenz auf einem ersten Abschnitt (281a) des Torsionselements (280) verbunden ist, und dass ein zweiter Schwingkreis (LC) mit einer zweiten Eigenfrequenz mit einem zweiten Abschnitt (281b) verbunden ist.

4. Sensor nach einem der vorstehenden Ansprüche, **dadurch gekennzeichnet, dass** der Schwingkreis (LC) mindestens ein kapazitives (C) und ein induktives Element (L) aufweist.

5. Sensor nach Anspruch 4, **dadurch gekennzeichnet, dass** das kapazitive Element ein Kondensator und / oder das induktive Element ein Stromleiter ist.

6. Sensor nach einem der vorstehenden Ansprüche, **dadurch gekennzeichnet, dass** die Schwingkreise (LC) jeweils einen Anfangs- und Endpunkt aufweisen, wobei die Anfangs- und Endpunkte der Schwingkreise, vorzugsweise entlang einer Bewegungsbahn, versetzt voneinander angeordnet sind.

7. Sensor nach einem der vorstehenden Ansprüche, **dadurch gekennzeichnet, dass** die Eigenfrequenz des Schwingkreises mittels der Verlaufsform des Stromleiters festgelegt wird.

8. Sensor nach einem der vorstehenden Ansprüche, **dadurch gekennzeichnet, dass** die Eigenfrequenz des Schwingkreises (LC) in Abhängigkeit der Erregerfrequenz festgelegt wird.

9. Sensor nach einem der vorstehenden Ansprüche, **dadurch gekennzeichnet, dass** die Wechselspannung eine Spannungsfrequenz (f) aufweist, die in unterschiedliche Frequenzen einstellbar ist.

10. Sensor nach einem Anspruch 9, **dadurch gekennzeichnet, dass** die Spannungsfrequenz (f) mittels Addition mehrerer Spannungsfrequenzen (f1, f2) eingestellt wird.

11. Sensor nach Anspruch 9 oder 10, **dadurch gekennzeichnet, dass** die Spannungsfrequenz (f) abwechselnd in unterschiedliche Frequenzen einstellbar ist.

12. Sensor nach einem der vorstehenden Ansprüche, **dadurch gekennzeichnet, dass** die Spannungsfrequenz (f) in Abhängigkeit der Eigenfrequenz der Schwingkreise (LC) eingestellt wird oder die Eigenfrequenz in Abhängigkeit der unterschiedlich einstellbaren Spannungsfrequenzen festgelegt wird.

13. Drehwinkel- und Drehmomentsensor nach einem der vorstehenden Ansprüche.

Fig. 1

7

Fig. 2

Fig. 3

**Fig. 4**

**Fig. 5**

Europäisches
Patentamt

European
Patent Office

Office européen
des brevets

**EUROPÄISCHER RECHERCHENBERICHT**

Nummer der Anmeldung

EP 14 19 7720

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 925 914 A2 (A B ELEKTRONIK GMBH [DE]) 28. Mai 2008 (2008-05-28) | 1-13 | INV. G01D5/20 G01L3/00 |
| Y | * Absatz [0027] - Absatz [0059]; Abbildungen 1-3,7,8 * | 1-13 | |
| | ----- | | |
| X | GB 2 493 399 A (TT ELECTRONICS TECHNOLOGY LTD [GB]) 6. Februar 2013 (2013-02-06) | 1,2,4-12 | |
| Y | * Seiten 3-11; Abbildungen 1,2,6 * | 3 | |
| | ----- | | |
| X | EP 1 666 836 A2 (A B ELEKTRONIK GMBH [DE]) 7. Juni 2006 (2006-06-07) | 1-13 | |
| Y | * das ganze Dokument * | 1-13 | |
| | ----- | | |
| Y,D | EP 1 828 722 B1 (HOWARD MARK ANTHONY [GB]) 2. November 2011 (2011-11-02) * das ganze Dokument * | 1-13 | |
| | ----- | | |

RECHERCHIERTE
SACHGEBIETE (IPC)

G01D
G01L

Der vorliegende Recherchenbericht wurde für alle Patentansprüche erstellt

| Recherchenort | Abschlußdatum der Recherche | Prüfer |
|---|---|---|
| München | 15. April 2015 | Kallinger, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 19 7720

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2015

| Im Recherchenbericht angeführtes Patentdokument | Datum der Veröffentlichung | Mitglied(er) der Patentfamilie | Datum der Veröffentlichung |
|---|---|---|---|
| EP 1925914 A2 | 28-05-2008 | DE 102006055409 A1<br>EP 1925914 A2<br>US 2008116883 A1 | 29-05-2008<br>28-05-2008<br>22-05-2008 |
| GB 2493399 A | 06-02-2013 | KEINE | |
| EP 1666836 A2 | 07-06-2006 | AT 425434 T<br>DE 102004056049 A1<br>EP 1666836 A2<br>US 2006144166 A1 | 15-03-2009<br>01-06-2006<br>07-06-2006<br>06-07-2006 |
| EP 1828722 B1 | 02-11-2011 | EP 1828722 A1<br>GB 2426065 A<br>WO 2006067420 A1 | 05-09-2007<br>15-11-2006<br>29-06-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 1828722 B1